# EUROPEAN PATENT SPECIFICATION

(11) **EP 2 551 102 B1**
(45) Date of publication and mention of the grant of the patent: **03.12.2014**
(21) Application number: 11176047.6
(22) Date of filing: 29.07.2011
(51) Int. Cl.: B32B 5/20, C09J 5/08, C09J 133/00

(54) **Self-stick foam adhesive**
Selbstklebendes Schaumhaftmittel
Adhésif de mousse auto-collante

(43) Date of publication of application: 30.01.2013
(73) Proprietor: 3M Innovative Properties Company, Saint Paul, MN 55133-3427 (US)
(72) Inventor: Traser, Steffen, 64291 Darmstadt (DE); Forster, Jan Daniel, 52066 Aachen (DE)
(74) Representative: Gabriel, Kiroubagaranne

(56) References cited:
- WO-A1-03/052020
- US-A- 5 976 690
- US-A1- 2004 229 000

## Description

### Field of the invention

The present invention relates to a method of making self-stick foam adhesives. The invention further relates to self-stick foam adhesives having high internal strength combined with high adhesive properties to various substrates. The invention further relates to articles containing self-stick foam adhesives and to uses of the self-stick acrylic foam adhesives.

### Background Art

Pressure sensitive adhesives (PSA) are well know and used in many applications. For example body side mouldings can permanently be mounted to automotive vehicles by means of a multilayer PSA, typically comprising a foam core with relatively thin pressure sensitive adhesive surface layers laminated on both sides of the core. The foam core may be an acrylic foam, provided by a layer of an acrylic pressure-sensitive adhesive in which microbubbles are dispersed. The core can be made with UV curing, as is disclosed in U.S. Pat. No. 4, 223,067. The thin acrylic PSA layers typically are unfilled PSA layers having a composition selected for its adhesion to the particular surface. The thin layers on each side of the foam tape may be the same or may be different.

Recent developments in paints for automotive vehicles have led to the introduction of high performing paints and clear coats. These new paints and clear coats provide the vehicle with high dirt repellent and scratch resistant properties and are characterised by having a low energy surface. Due to the low energy of these surfaces, they are difficult to adhere to. The body side moulding itself is typically made of materials, such as for example polypropylene/EPDM, having a low energy surface as well.

In order to permanently mount the body side moulding to these low energy surfaces, the application of a primer may be necessary. In order to eliminate the need for a primer, multilayer foam tapes may be used comprising thin outer layers of PSA having high levels of tackifying agents. PSA's having high levels of tackifiers are typically made by solution polymerization, which is environmentally not favourable. Moreover, although multilayer foam tapes may be performing well, their production requires a multistep process and accordingly high production costs are associated with it.

### Summary

It has now been found that self-stick foam adhesives can be prepared that have high adhesion properties to a variety of substrates, including substrates having a low energy surface, without the need for laminating thin layers of pressure-sensitive adhesive on the outer surfaces of the foam.

Therefore, in one aspect there is provided a method of making a self-stick foam adhesive, comprising
a. a crosslinked (meth)acrylate polymer comprising repeating units derivable from a monomer composition comprising
   i. 55 to 97.4 wt. % of one or more alkyl (meth)acrylate monomers, the alkyl groups of which comprise from 4 to 14 carbon atoms
   ii. 2.5 to 40 wt. % of one or more ethylenically unsaturated monomers comprising a nitrogen- or oxygen containing heterocyclic ring
   iii. 0.1 to 5 wt. % of one or more polar comonomers
b. 1 to 60 parts by weight of one or more hydrogenated resin tackifier per 100 parts by weight of the cross-linked (meth)acrylate polymer and
c. 1 to 20 parts by weight microspheres per 100 parts by weight of the cross-linked (meth)acrylate polymer,
the method comprising
polymerizing monomer components of the monomer composition and wherein at least part of the polymerization is carried out in the presence of crosslinking agent, the total amount of crosslinking agent used in the polymerization being between 0.01 and 2 parts by weight per 100 parts by weight of the monomer composition, 1 to 60 parts of one or more hydrogenated resin tackifier per 100 parts by weight of the monomer composition and 1 to 20 parts microspheres per 100 parts of the monomer composition and wherein the polymerization is initiated by radiation substantially in the absence of solvent.

In a further aspect there is provided a self-stick foam adhesive obtainable by the method as provided above.

In a further aspect there is provided an article comprising a layer of the self-stick foam as provided above having a thickness between 150 and 3000µm and comprising at least one liner selected from a release liner and a carrier film.

In another aspect there is provided an article comprising the self-stick foam adhesive as provided above and at least one substrate having a surface tension of less than 50 mN/m as measured prior to applying the adhesive.

In yet a further aspect there is provided a use of the self-stick foam adhesive provided above for adhering substrates wherein at least one of the substrates has a surface tension of less than 50mN/m as measured prior to applying the adhesive.

In a further aspect there is provided a self-stick foam adhesive comprising
a) a crosslinked (meth)acrylate polymer comprising
   i. 55 to 97.4 wt. % of units derived from one or more alkyl (meth)acrylate monomers, the alkyl groups of which comprise from 4 to 14 carbon atoms
   ii. 2.5 to 40 wt. % of units derived from one or more ethylenically unsaturated monomers comprising a nitrogen- or oxygen containing heterocyclic ring
   iii. 0.1 to 5 wt. % of units derived from one or more polar comonomers
b. 1 to 60 parts of one or more hydrogenated resin tackifier based on 100 parts by weight of the crosslinked (meth)acrylate polymer and
c. 1 to 20 parts microspheres per 100 parts by weight of the crosslinked (meth)acrylate polymer

The method according to the invention provides a foam adhesive having self-stick properties. The foam adhesives are characterised by having high adhesion values, such as 90° peel adhesion to a variety of substrates, in combination with high internal strength, as reflected by high static shear values, in particular high static shear values at elevated temperatures. The self-stick foams can be firmly adhered to critical substrates, such as substrates having a low energy surface, without the need for a primer. The adhesive properties of the self-stick foams are comparable to or even better than properties of a laminated foam tape prepared by laminating a pressure sensitive adhesive layer on one or both sides of a foam core. The method to make the self-stick foams according to the invention allows to prepare thick adhesive layers, having high adhesion and internal strength, in one production step, without the need for laminating further adhesive layers onto it. Accordingly the method has the further advantage that it is economically favourable.

### Detailed description

Before any embodiments of this disclosure are explained in detail, it is to be understood that the disclosure is not limited in its application to the details of compositions and the arrangement of components set forth in the following description. The invention is capable of other embodiments and of being practiced or of being carried out in various ways. Also, it is to be understood that the phraseology and terminology used herein is for the purpose of description and should not be regarded as limiting. Contrary to the use of "consisting", the use of "including," "containing", "comprising," or "having" and variations thereof is meant to be of broad scope and is meant to encompass the items listed thereafter, equivalents thereof and further items. The word "consisting of" is meant to be of limiting scope and is meant to encompass only the items listed thereafter and equivalents thereof but not any additional items. The term "consisting essentially of" has a meaning as defined in the description below.

The use of "a" or "an" is meant to encompass "one or more". Any numerical range recited herein is intended to include all values from the lower value to the upper value of that range. For example, a concentration range of from 1% to 50% is intended to be an abbreviation and to expressly disclose the values between the 1% and 50%, such as, for example, 2 %, 40 %, 10 %, 30 %, 1.5%, 3.9 % and so forth.

As used herein above and below the term 'ethylenically unsaturated monomer' refers to a monomer capable of undergoing a free radical reaction when exposed to radicals generated by decomposition of a suitable initiator under radiation, such as actinic radiation such as UV, or e-beam radiation. Examples of suitable ethylenically unsaturated groups include vinyl, allyl, acrylate and methacrylate groups.

### Monomer composition

The monomer composition comprises one or more alkyl acrylate and/or alkyl methacrylate monomers, further referred to as alkyl (meth)acrylate monomers. Useful alkyl (meth) acrylate monomers include monofunctional (meth)acrylate esters of linear and branched alkyl alcohols, the alkyl groups of which have from 4 to 14, in particular, from 4 to 12 carbon atoms. Useful examples include n-butyl acrylate, isobutyl acrylate, hexyl acrylate, 2-ethylhexyl acrylate, isooctyl acrylate, n-octyl acrylate, 2-methylbutyl acrylate, isononyl acrylate, n-nonyl acrylate, n-decyl acrylate, isodecyl acrylate, 4-methyl-2-pentyl acrylate, 2-propylheptyl acrylate, dodecyl acrylate, their methacrylate analogues and combinations thereof. Preferred alkyl (meth)acrylate monomers include isooctyl acrylate, n-butyl acrylate, 2-ethylhexyl acrylate, isononyl acrylate, dodecyl acrylate, 2-propyl heptyl acrylate and combinations thereof. Particularly suitable alkyl (meth)acrylate monomers include isooctylacrylate, 2-ethyl hexyl acrylate, 2-propylheptyl acrylate and combinations thereof. The amount of the alkyl (meth)acrylate monomer with respect to the total weight of the monomers comprises from 55 to 97.4 wt. %, preferably between 70 and 95 wt. %, more preferably between 75 and 93 wt. %, based on total weight of the monomers.

The monomer composition further comprises at least one ethylenically unsaturated monomer comprising a nitrogen- or oxygen containing heterocyclic ring.

Suitable examples include vinyl monomers comprising a nitrogen- or oxygen containing heterocyclic ring, such as N-vinyl lactams, including for example N-vinyl caprolactam ; N-vinyl pyrrolidone ; N-vinyl phtalimide, 1-vinyl imidazole, 4-vinyl pyridine and combinations thereof.

Further examples include (meth)acrylate monomers comprising a nitrogen- or oxygen containing heterocyclic ring, such as for example pyrrolidone acrylates, including for example pyrrolidone ethyl acrylate ; tetrahydrofurfuryl acrylate and acryloyl morpholine. Further examples include oxetane (meth) acrylates, such as for example 3-ethyl-3-oxetanyl (meth)acrylate, commercially available from San Ester Corporation, Japan. Further examples include dioxolane functional acrylates or methacrylates, such as for example cychohexyl dioxolane (meth)acrylate, methyl isobutyl dioxolane (meth)acrylate, dimethyl dioxolane (meth)acrylate and methyl ethyl dioxolane (meth)acrylate, all commercially available from San Ester Corporation, Japan.

Particular suitable ethylenically unsaturated monomers comprising a nitrogen- or oxygen containing heterocyclic ring include N-vinyl caprolactam, acryloyl morpholine, tetrahydrofurfuryl acrylate and combinations thereof.

The ethylenically unsaturated monomer comprising a nitrogen- or oxygen containing heterocyclic ring can suitably be used in amounts from 2.5 to 40 wt. %, preferably between 3 and 30 wt. %, particular between 4 and 25 wt. % based on the total weight of the monomer mixture.

The monomer composition further comprises one or more polar monomers. Polarity (i. e., hydrogen-bonding ability) is frequently described by the use of terms such as 'strongly', 'moderately', and 'poorly'. References describing these and other solubility terms include 'Solvents', Paint Testing Manual, 3rd ed., G.G. Seward, Ed., American Society for Testing and Materials, Philadelphia, Pennsylvania, and 'A Three-Dimensional Approach to Solubility', Journal of Paint Technology, Vol. 38, No. 496, pp. 269 - 280. Examples of strongly polar monomers include acrylic acid, methacrylic acid, itaconic acid, hydroxyalkyl acrylates, acrylamides and substituted acrylamides. Examples of moderately polar monomers include acrylonitrile and N,N-dialkylamino (meth)acrylates. Examples of relatively poor polar monomers include cyano acrylate, fumaric acid, crotonic acid, citronic acid, maleic acid, ß-carboxyethyl acrylate and sulfoethyl methacrylate.

Particular suitable polar monomers are selected from the group consisting of strongly polar monomers and include for example acrylic acid, methacrylic acid and itaconic acid. Of these, acrylic acid is of particular interest.

The amount of polar monomers is from 0.1 to 5 wt. %, preferably between 1 and 4 wt. %, particular between 1.2 and 3.5 wt. % based on total weight of the monomer composition.

### Crosslinking agent

One or more cross-linking agents are used in an amount effective to optimize the cohesive or inner strength of the self-stick foam adhesives. Useful cross-linking agents include thermal cross-linking agents and photosensitive cross-linking agents, which are activated by ultraviolet (UV) light. Suitable cross-linking agents include multifunctional ethylenically unsaturated monomers, including multifunctional acrylates ; triazines, and combinations thereof.

Useful examples of multifunctional acrylates include 1,6-hexanediol diacrylate, 1,12-dodecanol diacrylate, 1,2-ethylene glycol diacrylate, tripropylene glycol diacrylate, trimethylolpropane triacrylate and pentaerythritol tetraacrylate. Particularly suitable are multifunctional acrylates comprising two- or three acrylate groups, of which 1,6-hexanediol diacrylate is especially preferred.

Examples of useful triazines include 2,4,-bis(trichloromethyl)-6-(4-methoxy phenyl)-s-triazine, 2,4-bis(trichloromethyl)-6-(3,4-dimethoxyphenyl)-s-triazine, and the chromophore-substituted halo-s-triazines disclosed in U.S. Pat. Nos. 4,329,384 and 4,330,590.

The crosslinking agent is present in an amount between 0.01 to 2 pph, preferably between 0.05 and 1.5 pph and in particular between 0.08 and 0.15 pph.

### Tackifier

The self-stick foam adhesive according to the invention further comprises a tackifier in an amount effective to optimize the adhesion of the self-stick foam adhesive to a variety of substrates, in particular to low energy substrates. Useful tackifiers do not interfere with the radiation reaction to prepare the crosslinked (meth)acrylate polymer. Examples of useful tackifiers include partially or fully hydrogenated resins. Of particular interest are fully hydrogenated hydrocarbon resin tackifiers. Examples of useful hydrogenated hydrocarbon tackifiers include, C₉ and C₅ hydrocarbons such as those sold under the trade designation "REGALITE S-5100", "REGALITE R-7100", "REGALITE R-9100", "REGALITE R-1125", "REGALITE S-7125", "REGALITE S-1100", "REGALITE R-1090", "REGALREZ 6108", "REGALREZ 1085", "REGALREZ 1094", "REGALREZ 1126", "REGALREZ 1126", "REGALREZ 1139", and "REGALREZ 3103", sold by Eastman Chemical Co., Middelburg, Netherlands; "PICCOTAC" and EASTOTAC" sold by Eastman Chemical Co.; "ARKON P-140", "ARKON P-125", "ARKON P-115", "ARKON P-100", "ARKON P-90", "ARKON M-135", "ARKON M-115", "ARKON M-100", and "ARKON M-90" sold by Arakawa Chemical Inc., Chicago, IL; and "ESCOREZ 500" sold by Exxon Mobil Corp., Irving, TX. Particular useful hydrogenated resin tackifer includes "REGALREZ 6108".

The amount of hydrogenated resin tackifier present in the self-stick foam adhesive is from 1 to 60 parts per hundred parts by weight (pph) of monomer composition. Useful amounts of tackifier include levels from 1 to 40 pph, preferably from 5 to 25 pph, particular from 7.5 to 15 pph based on 100 parts of the monomer composition.

### Microspheres

The self-stick foam adhesive further comprises microspheres. The microspheres may be selected from a variety of materials including by way of example glass, silica, ceramic or zirconia. Useful microspheres can have a size ranging from 5 to 200 micrometers in diameter, and preferably from 10 to 120 micrometers.

Suitable commercially available microspheres include unexpanded organic hollow microspheres, available, for example, from Akzo Nobel under the trade designation "EXPANCEL". Unexpanded organic hollow microspheres are sometimes also referred to as expandable organic microballoons which are also available, for example, from Lehmann and Voss, Hamburg, Germany under the trade designation "MICROPEARL". The microspheres expand upon heating and can be incorporated into the adhesive composition in the expanded form. They can also be added in unexpanded form to the adhesive composition as they will expand under influence of the heat produced during curing and thus provide a foam-like adhesive. Pre-expanded organic hollow microspheres are commercially available, for example, from Lehmann & Voss, Hamburg, Germany under the trade designation "DUALITE".

Glass micropsheres and ceramic microspheres can also be used. Suitable glass microspheres, commercially available from, for example, 3M Company, include microspheres available under the trade designation "GLASS BUBBLES D32", "GLASS BUBBLES K15" or "SCOTCHLITE D32/4500".

Preferred microspheres include hollow inorganic microspheres, such as "GLASS BUBBLES K15".

Useful amounts of microspheres range from 1 to 20 parts per hundred parts of monomer mixture, preferably from 4 to 16 parts, especially preferred from 5 to 10 parts per hundred parts of monomer mixture.

### Initiator

The polymerization of the monomer composition is initiated by radiation and accordingly the monomer composition comprises one or more radiation activatable polymerization initiators. Examples of useful initiator include benzoin ethers (e.g., benzoin methyl ether, benzoin isopropyl ether, substituted benzoin ethers such as anisoin methyl ether), acetophenones (e.g., 2,2-diethoxyacetophenone), substituted acetophenones such as 2,2-diethoxyacetophenone, 2,2-dimethoxy-2-phenyl-acetophenone, and 1-phenyl-2-hydroxy-2-methyl-1-propanone, substituted alpha-ketols (e.g., 2-methyl-2-hydroxy-propiophenone), aromatic sulphonyl chloride, and photoactive oximes such as 1-phenyl-1,1-propanedione-2-(O-ethoxycarbonyl) oxime. Particularly suitable initiators include 2,2-dimethoxy-2-phenylacetophenone.

The initiator is preferably present in the curable precursor in an amount of 0.01 - 2.00 pph, in particular, between 0.05 - 1.00 pph and very specifically between 0.1 - 0.5 pph.

### Further additives

The self-stick foam adhesive may comprise further components and adjuvents such as for example thixotropic agents. Thixotropic agents may be added to control the flow characteristics of the monomer composition and typically include particulate materials having particle sizes of less than 50 nm. Preferred thixotropic agents include fumed silica. Thixotropic agents are for example commercially available under the trade designation "CAB-O-SIL" from Cabot, Schwalbach im Taunus, Germany, or "AEROSIL" from Degussa Evonik GmbH, Frankfurt, Germany. When used, the thixotropic agent will typically be added in amounts up to 15 parts, preferably up to 10 parts per hundred parts of monomer mixture.

Other additives can be included in the self-stick foam adhesive as long as they do not interfere with the radical polymerization reaction or they do not negatively affect the desired properties of the adhesive. Useful further additives include reinforcing agents, dyes, pigments, light stabilizing additives, antioxidants, fibers, electrically and/or thermally conducting particles, fire retardants, surface additives (flow additives), rheology additives, nanoparticles, degassing additives, hydrophobic or hydrophilic silica, calcium carbonate, blowing agents, toughening agents and plasticizers.

### Method of making the self-stick foam adhesive

The method of making the self-stick foam adhesive comprises polymerizing monomer components of the monomer composition and at least part of the polymerization is carried out in the presence of crosslinking agent, one or more hydrogenated resin tackifier and microspheres. The polymerization is initiated by radiation, such as actinic radiation such as UV, or e-beam radiation. The polymerization is initiated substantially in the absence of solvent. The term "substantially in the absence of solvent" as used above and below means that less than 5%, preferably less than 1% and more preferably no solvent is used in the method of making the self-stick foam adhesive. The term "solvent" refers both to water and to conventional organic solvents used in the industry, such as for example methanol, acetone, dimethylsulfoxide, or toluene.

The method may comprise a one step process or it may comprise a multistep process. In a first embodiment, the method comprises a one step process. In that case, the monomer composition is typically mixed with the other components, including hydrogenated tackier, crosslinking agent, microspheres and optional additives to form a coatable syrup, typically having a Brookfield viscosity between 300 and 50000 mPa.s (25 °C). A radiation activatable initiator as described above is added and the mixture, further referred to as curable precursor of adhesive can be radiation polymerized or cured in bulk or preferably in the form of a layer as described below.

In another embodiment, the method comprises a multistep process. A first step comprises partial polymerization (or pre-polymerization) of at least monomers (i) and (iii). Ethylenically unsaturated monomers comprising a nitrogen- or oxygen containing heterocyclic ring can be added at this point or can be added later in the process. A radiation activatable initiator as described above is added and the mixture is partially polymerized to form a syrup having a viscosity of, for example, 300 to 50 000 mPas (Brookfield, 25 °C). The partial polymerization of the monomer mixture can be done under UV radiation with appropriate UV lamps having, at a wavelength between 300 - 400 nm and with a maximum at 351 nm, an intensity of preferably between 0.1 and 25 mW/cm². The exposure preferably is between 900-1,500 mJ/cm². The partial polymerization may be stopped by introducing free radical inhibition, including for example removal of the UV source and/or by the introduction of, for example, radical scavenging oxygen.

In an alternative embodiment, the first step, i.e. making a syrup can be made by thermal pre-polymerization. In that case, a thermal initiator is used rather than a radiation activatable polymerization initiator. Suitable thermal initiators include for example azo, peroxide, persulfate and redox initiators or combinations thereof. Particularly suitable thermal free radical initiators are commercially available such as those available from DuPont Company under the "VAZO" trade designation. Specific examples include "VAZO 64" (2,2'-azobis(isobutyroniltrile) and "VAZO 52". Suitable initiators also include hydroperoxides, such as tert-butyl hydroperoxide, and peroxides, such as benzoyl peroxide and cyclohexane peroxide. The thermal pre-polymerization can be stopped for example by introducing radical scavenging oxygen.

In a second step, to the syrup comprising partially polymerized monomers as described above are added any remaining monomers that were not added to make the syrup, so as to obtain the desired monomer composition. Further additions comprise a radiation activatable initiator, and the other compounds, including microspheres, crosslinking agent, tackifier and any additives as may be used, thus providing a coatable mixture, further referred to as curable precursor of adhesive. The Brookfield viscosity of the mixture (at 25 °C) preferably is between 300 and 50,000 mPa·s, more preferably between 1000 and 30,000 mPa·s and particularly preferred between 2500 and 15,000 mPa·s.

The curable precursor of adhesive can be polymerized or cured by exposure to radiation, in bulk or preferably in the form of a layer. Therefore the curable precursor can be coated onto a carrier film or between a carrier film and a siliconized release liner such as a siliconized PET-liner that is transparent to ultraviolet radiation. Preferably, the curable precursor of adhesive can be coated between two siliconized release liners, such as siliconized PET-liners that are transparent to ultraviolet radiation. The layer thus formed typically has a thickness between 150 µm and 5000 µm, preferably between 300 µm and 3000 µm, more preferably between 500 µm and 1500 µm.

Useful carrier films include polyolefins such as polyethylene, polypropylene (including isotactic polypropylene), polystyrene, polyester, including poly(ethylene terephthalate), polyvinyl chloride, poly(butylene terephthalate), poly(caprolactam), polyvinyl alcohol, polyurethane, poly(vinylidene fluoride), cellulose and cellulose derivates, such as cellulose acetate and cellophane, and the like. Commercially available backing materials useful in the disclosure include kraft paper (available from Monadnock Paper, Inc.); spun-bond poly(ethylene) and poly(propylene), such as those available under the trade designations "TYVEK" and "TYPAR" (available from DuPont, Inc.); and porous films obtained from poly(ethylene) and poly(propylene), such as those available under the trade designations "TESLIN" (available from PPG Industries, Inc.), and "CELLGUARD" (available from Hoechst-Celanese).

The curable precursor can be polymerized or cured by passing the coated layer by a UV-curing station. Preferably curing can be effected from each site of the coating, i.e. curing is effected both from the top and from the bottom of the coated layer. The radiation can be provided by fluorescent lamps at a wavelength between 300 - 400 nm with a maximum at 351 nm and with an intensity of preferably between 0.1 and 25 mW/cm².

After curing, one of the release liners can be removed and replaced by a carrier film or a backing thus providing an adhesive article that can be attached to a desired substrate. The backing may comprise on the surface opposite the foam adhesive, a pigment, indicia, text, design, etc, which is then fixedly attached to the surface of the substrate.

Typical examples of backing materials include those made of paper, plastic films such as polypropylene, polyethylene, polyester (e.g., polyethylene terephthalate), cellulose acetate, and ethyl cellulose. Backings may also be prepared of fabric such as woven fabric formed of threads of synthetic or natural materials such as cotton, nylon, rayon, glass, ceramic materials, and the like or nonwoven fabric such as air laid webs of natural or synthetic fibers or blends of these. The backing may also be formed of metal, in particular aluminium, metallised polymer films, or ceramic sheet materials that are typically used with adhesive foam compositions.

### Substrates

The self-stick foam adhesives obtainable by the method according to the invention are characterized by having particularly good adhesion properties, such as high peel strength, combined with high internal strength, such as high shear values, on a variety of substrates. Useful substrates include high energy substrates, including stainless steel, glass, aluminium. Further useful substrates include substrates having a low energy surface. With "low energy surface" as used herein is meant a surface that exhibits low polarity and a critical surface less than 50 mN/m. The surface tension may be measured as described by Owens et al. in the Journal of Applied Polymer Science, v. 13 p. 1741-1747 (1969). Exemplary substrates include: low density polyethylene (31 mN/m), polypropylene (29 mN/m), polystyrene (36 mN/m), polyvinyl chloride (39 mN/m), polyvinyl acetate (37 mN/m), polyester, poly(meth)acrylates and combinations thereof.

Still further useful substrates include paints and clear coats (e.g., automotive clear coats). These clear coats include acrylic resins and polyesters used alone or with mixtures of copolymers comprising hydroxy- or glycidyl-functionalities or carbamatic acid residues (groups); or copolymers of acrylic acid and methacrylic acid esters with hydroxyl groups, free acid groups and further monomers (e.g., styrene). Examples of clear coats include those available from BASF, Germany, under the trade designation "UREGLOSS" and from PPG Industries, Pittsburgh, PA, under the trade designation "CERAMICLEAR5".

The self-stick foam adhesives obtainable by the method according to the invention can be used in various applications, such as for example adhering automotive body side moldings, weather strips, road signs, commercial signs, constructions, electrical cabinets, shell molds, machine parts, junction boxes, backsheets for photovoltaic modules.

The method according to the invention allows for the provision of self-stick foam adhesives having one or more or all of the following adhesive properties:
(i) a 90° peel on polypropylene plate of more than 11 N/12.7 mm, preferably more than 15 N/12.7mm , when tested according to Finat No. 2 test method
(ii) a 90° peel on polyethylene foil of more than 7 N/12.7mm, when tested according to Finat No. 2 test method
(iii) a 90° peel on a clear coat of more than 13 N/12.7 mm, preferably more than 15, more preferably more than 18 N/12.7 mm, when tested according to Finat No. 2 test method

in combination with a static shear of at least 500 min, preferably at least 1000 min, more preferably at least 2000 min, more preferably at least 10000 min, when tested according to Finat No. 8 test method. (70 °C, 500 g, SS)

Typical embodiments have a 90° peel as tested according to Finat No. 2 test method, of at least 14 N/12.7 mm on stainless steel, at least 11 N/12.7 mm on polypropylene, at least 7 N/12.7 mm on polyethylene foil, at least 13 N/12.7 mm on clear coats, combined with a static shear as measured according to Finat No. 8 test method (500g, 70 °C, SS) of at least 500 min.

In the following list specific embodiments will be described to further illustrate the invention. This list is provided for illustrative purposes and is not meant to limit the invention thereto.
1. Method of making a self-stick foam adhesive, comprising
   a. a crosslinked (meth)acrylate polymer comprising repeating units derivable from a monomer composition comprising
      i. 55 to 97.4 wt. % of one or more alkyl (meth)acrylate monomers, the alkyl groups of which comprise from 4 to 14 carbon atoms
      ii. 2.5 to 40 wt. % of one or more ethylenically unsaturated monomers comprising a nitrogen- or oxygen containing heterocyclic ring
      iii. 0.1 to 5 wt. % of one or more polar comonomers
   b. 1 to 60 parts by weight of one or more hydrogenated resin tackifier per 100 parts by weight of the cross-linked (meth)acrylate polymer and
   c. 1 to 20 parts by weight microspheres per 100 parts by weight of the cross-linked (meth)acrylate polymer,
   the method comprising
   polymerizing monomer components of the monomer composition and wherein at least part of the polymerization is carried in the presence of crosslinking agent, the total amount of crosslinking agent used in the polymerization being between 0.01 and 2 parts by weight per 100 parts by weight of the monomer composition, 1 to 60 parts of one or more hydrogenated resin tackifier per 100 parts by weight of the monomer composition and 1 to 20 parts microspheres per 100 parts of the monomer composition and
   wherein the polymerization is initiated by radiation substantially in the absence of solvent.
2. Method according to claim 1 wherein the polymerization comprises
   a) Partial polymerization of at least monomers (i) and (iii) in the presence of a free radical initiator substantially in the absence of solvent so as to form a syrup having a Brookfield viscosity between 300 and 50000 mPa.s (25°C); terminating the partial polymerization by introducing free radical inhibition in the syrup;
   b) Adding to the syrup any remaining amount of monomers of the monomer composition so as to obtain the desired composition of the (meth)acrylate polymer, the crosslinking agent, the tackifier, the microspheres, and a radiation activatable free-radical initiator and initiating by exposing the thus obtained mixture to radiation substantially in the absence of solvent.
3. Method according to 2. wherein part or all of the microspheres are added in step one.
4. Method according to any one of 1. to 3. wherein the one or more alkyl (meth) acrylate monomers comprise one or more acrylate esters selected from isooctyl acrylate, 2-ethyl hexyl acrylate, n-butyl acrylate, n-heptyl acrylate, n-octyl acrylate, isononyl acrylate, n-decyl acrylate, 2-propyl heptyl acrylate and combinations thereof.
5. Method according to any one of 1. to 4. wherein the one or more alkyl (meth) acrylate monomers comprises isooctyl acrylate, 2-ethyl hexyl acrylate, 2-propyl heptyl acrylate and combinations thereof.
6. Method according to any one of 1. to 5. wherein the mixture comprises at least 70 wt. % alkyl (meth)acrylate monomers.
7. Method according to any one of 1. to 6. wherein the mixture comprises between 75 and 93 wt. % alkyl (meth)acrylate monomers.
8. Method according to any one of 1. to 7. wherein the ethylenically unsaturated monomer comprising a nitrogen- or oxygen containing heterocyclic ring is selected from the group consisting of vinyl derivatives including N-vinyl lactams, N-vinyl pyrrolidone, N-vinyl phtalamid, N-vinyl imidazol and combinations thereof.
9. Method according to any one of 1. to 7. wherein the ethylenically unsaturated monomer comprising a nitrogen- or oxygen containing heterocyclic ring is selected from the group consisting of (meth)acrylate derivatives including pyrrolidone (meth)acrylates, tetrahydrofurfuryl (meth)acrylate, (meth)acryloyl morpholine, oxetane (meth)acrylates, dioxolane (meth)acrylates and combinations thereof.
10. Method according to any one of 1. to 9. wherein the ethylenically unsaturated monomer comprising a nitrogen- or oxygen containing heterocyclic ring is selected from N-vinyl caprolactam, tetrahydrofurfuryl acrylate, acryloylmorpholine and combinations thereof.
11. Method according to any one of 1. to 10. wherein the monomer mixture comprises from 4 to 25 wt. % of the ethylenically unsaturated monomer comprising a nitrogen- or oxygen containing heterocyclic ring.
12. Method according to any one of 1. to 11. wherein the polar monomer is selected from strongly polar monomers including acrylic acid, methacrylic acid, itaconic acid and combinations thereof.
13. Method according to any one of 1. to 12. wherein the monomer mixture comprises at most 4 wt. % of polar monomer.
14. Method according to any one of 1. to 13. wherein the monomer mixture comprises from 0.5 to 3 wt. % of polar monomer.
15. Method according to any one of 1. to 14. wherein the crosslinking agent is selected from a multifunctional (meth)acrylate, comprising 2, 3 or 4 acrylic functions or a triazine and combinations thereof.
16. Method according to 15. wherein the crosslinking agent is selected from 1,6-hexanediol diacrylate, trimethylol propane triacrylate, 1,2-ethylene glycol diacrylate, tripropylene glycol diacrylate, dipropylene glycol diacrylate, 1,12-dodecanediol diacrylate, pentaerythritol tetraacrylate and combinations thereof.
17. Method according to any one of 1. to 16. comprising up to 1 part crosslinking agent per 100 parts monomer mixture.
18. Method according to any one of 1. to 17. wherein the tackifier comprises a fully hydrogenated hydrocarbon resin.
19. Method according to any one of 1. to 18. comprising up to 40 parts tackifier per 100 parts monomer mixture.
20. Method according to any one of 1. to 19. comprising between 5 and 25 parts tackifier per 100 parts monomer mixture.
21. Method according to any one of 1. to 20. wherein the microspheres are selected from glass bubbles, ceramic microspheres, expanded and expandable polymeric microspheres and combinations thereof.
22. Method according to any one of 1. to 21. comprising from 4 to 16 parts microspheres per 100 parts of the monomer mixture.
23. Method according to any one of 1. to 22. further comprising a thixotropic agent.
24. Method according to 23 wherein the thixotropic agent is fumed silica.
25. A self-stick foam adhesive obtainable by the method of any one of 1. to 24.
26. The self-stick foam adhesive according to 25. having a 90° peel adhesion greater than 15 N/12.7 mm when tested on clear coats, according to FINAT No. 2 test method and a shear value greater than 2000 min when tested according to FINAT No. 8 (SS, 70 °C, 500 g).
27. An article comprising a layer of the self-stick foam according to any one of 25. or 26. having a thickness between 150 and 3000µm and comprising at least one liner selected from a release liner and a carrier film.
28. An article comprising the self-stick foam adhesive according to any one of 25. or 26. and at least one substrate having a surface tension of less than 50 mN/m. as measured prior to applying the adhesive.
29. The article according to 28. wherein the substrate is selected from polypropylene, polyethylene, polystyrene, polyvinyl chloride, polyvinyl acetate, polyester, poly(meth)acrylate, a paint, a clear coat and combinations thereof.
30. Use of a self-stick foam adhesive according to any one of 25. or 26. for adhering substrates wherein at least one of the substrates has a surface tension of less than 50mN/m as measured prior to applying the adhesive.
31. Use of a self-stick foam adhesive according to 30. for adhering automotive body side moldings, weather strips, road signs, commercial signs, constructions, electrical cabinets, shell molds, machine parts, junction boxes, backsheets for photovoltaic modules.
32. A self-stick foam adhesive comprising
   a. a crosslinked (meth)acrylate polymer comprising
      i. 55 to 97.4 wt. % of units derived from one or more alkyl (meth)acrylate monomers, the alkyl groups of which comprise from 4 to 14 carbon atoms
      ii. 2.5 to 40 wt. % of units derived from one or more ethylenically unsaturated monomers comprising a nitrogen- or oxygen containing heterocyclic ring
      iii. 0.1 to 5 wt. % of units derived from one or more polar comonomers
   b. 1 to 60 parts of one or more hydrogenated resin tackifier per 100 parts of the monomer mixture and
   c. 1 to 20 parts microspheres per 100 parts of the monomer mixture

The following examples are provided to illustrate certain embodiments but are not meant to be limited in any way. Prior to that some test methods used to characterize materials and their properties will be described.

### Examples

All parts are parts by weight, unless otherwise indicated.

### A. Test methods and procedures

### Substrates

The self-stick foam adhesives were tested for their adhesive properties on following substrates:
- Steel: Stainless Steel (SS) plate ("Edelstahl 1.4301 IIID", 150 x 50 x 2 mm), available from Rocholl GmbH, Aglatershausen, Germany.
- PP: polypropylene plate ("Kunststoffprüfkörper PP nature"; Fabrikat Simona HWST; 150cm x 50 x 2 mm), available from Rocholl GmbH, Aglatershausen, Germany.
- Polyethylene foil 13 mils (330 micrometers) thick prepared in-house from polyethylene pellets available under the trade designation "VORIDIAN POLYETHYLENE 1550P" available from Eastman Chemical Co., Kingsport, TN. The foil was fixed on an aluminium plate (150cm x 50 x 2 mm), and testing was done on the smooth side.
- UreGloss: one component clear coat, available from BASF
- CeramiClear 5: acrylic-based clear coat from PPG Industries
- 2K clear coat (40-4460), available from Du Pont

Prior to testing, the substrates, except PE-foil, were cleaned
- The SS plates were first cleaned with MEK and n-heptane, dried with a tissue, and then cleaned with MEK and dried with a tissue.
- The PP panels and UreGloss clear coat were cleaned with a mixture of isopropylalcohol:distilled water (1:1) and dried with a tissue
- The clear coats was cleaned with n-heptane and dried with a tissue

### 90°-Peel-test @ 300 mmlmin (according to Finat Test Method No. 2)

A foam strip of 12,7 mm (millimeter) wide and more than 175 mm length was cut out in the machine direction from the cured self-stick foam adhesive. The release liner was removed from the strip and the foam was attached through its exposed adhesive surface onto a clean test plate, using light finger pressure. The standard FINAT test roller (6.8 kg) was rolled one time in each direction at a speed of approximately 10 mm per second to obtain intimate contact between the adhesive mass and the substrate surface. After applying the foam strip to the test plate, the test plate was left at room temperature for a period of 24 h before testing. The test plate with the foam strip was grasped in one movable jar for 90° peel tests of a tensile tester (Swick/Roell Z020, Ulm, Germany). The foam strip was folded back at an angle of 90° and its free end grasped in the upper jaw of the tensile tester in a configuration commonly utilized for 90° measurements. The tensile tester was set at 300 mm per minute jaw separation rate. Test results were expressed in Newton per 12,7 mm (N/12.7 mm) The quoted peel values are the average of three 90°-peel measurements.

### Static shear test @ 70 °C with 500 g (FINAT Test Method No. 8)

The static shear is a measure of the cohesiveness or internal strength of an adhesive. It is measured in units of time (minutes) required to pull a standard area of adhesive sheet material from a stainless steel test panel under stress of a constant, standard load.

A strip of 25 mm wide and 5.1 cm long was cut in machine direction from the cured adhesive foam sample. One release liner was removed from the strip and the foam was attached through its exposed adhesive surface onto an aluminium backing. Then the second release liner was removed and the foam was attached to the test substrate, providing a bond area of 25 x 10 mm and using light finger pressure. The standard FINAT test roller (6.8 kg) was rolled one time in each direction at a speed of approximately 10 mm per second to obtain intimate contact between the adhesive mass and the substrate surface. After applying the foam strip to the test plate, the test plate was left at room temperature for a period of 24 h before testing. A loop was prepared at the end of the test strip in order to hold the specified weight. The test panel was placed in a shear holding device. After a 10 min dwell time at the test temperature of 70 °C, the 500 g load was attached in the loop. The timer was started. The results are recorded in minutes and were the average of three shear measurements. A recorded time of "10000+" indicates that the adhesive did not fail after 10000 min.

### Dynamic shear test

A strip of 25 mm x 10 mm was cut in machine direction from the cured foam adhesive. One release liner was removed from the strip and the foam was attached through its exposed adhesive surface onto a clean aluminium test plate. Then the second release liner was removed and the foam was attached to a second aluminium test plate, using light finger pressure. The standard FINAT test roller (6.8 kg) was rolled one time in each direction at a speed of approximately 10 mm per second to obtain intimate contact between the adhesive mass and the substrate surfaces. After applying the foam strip between the test plates, the test sample was left at room temperature for a period of 24 h before testing. Then the test sample was fixed into the vertical support of a tensile tester at 70 °C. The machine was set at 50 mm per minute jaw separation rate. The test results are recorded in Newton per cm². The recorded values are the average of three dynamic shear measurements.

### Breakaway-continuous peel test

A specimen of 10 mm x 12 cm was cut in machine direction from the cured foam adhesive. One release liner was removed from the strip and the foam was attached through its exposed adhesive surface onto a primed PVC bar (Primer: 3M Scotchmount 4297). Then the second release liner was removed and the foam was attached onto a clean test plate (UreGloss) using light finger pressure. The standard FINAT test roller (6.8 kg) was rolled one time in each direction at a speed of approximately 10 mm per second to obtain intimate contact between the adhesive mass and the substrate surfaces. After applying the foam strip to test plate, the test sample was left at room temperature for a period of 72 h before testing. Then the test sample was fixed into the vertical support of a tensile tester. The machine was set at 300 mm per minute jaw separation rate. The test results were recorded in Newton for the breakaway-value and in Newton per cm for the continuous peel. The recorded values are the average of three measurements.

### Stress-relaxation test

A strip of 25 mm x 10 mm was cut in machine direction from the cured foam sample. One release liner was removed from the strip and the foam was placed on an aluminium T-profile. Then the second release liner was removed and the foam was attached onto a clean test plate (UreGloss) using light finger pressure during 5 seconds. After applying the foam strip to the substrate, the test sample was left at room temperature for a period of 24 h before testing. Then the test sample was fixed into the vertical support of a tensile tester . The machine was set at 10 mm per minute jaw separation rate, until 100 % elongation was reached. The sample was held in this position for 120 seconds, and then detached with a speed of 10 mm per minute. The test results are recorded in Newton per cm². The recorded values are the average of three measurements.

### Cold slam test

Four samples of 12.7 mm x 75 mm cm were cut in machine direction from the cured foam adhesive. One release liner was removed from the strip and the foam was attached through its exposed adhesive surface onto a primed PVC bar (Primer: 3M Scotchmount 4297 )The samples were fixed with the other side onto a painted panel (100 x 300 x 0.9 mm). The adhesive was pressed into place by rolling once with a 6.8 kg roller. The bonded assembly was continued for 72 hours at room temperature. Then the panel was placed together with a slamming fixture in a box maintained at -40 °C for minimum 4 hours. The panel was raised to 90 degree level position and released. The test was done at -30 °C, 10 times in rapid succession. The sample passes the test when the bond was maintained.

### Brookfield viscosity

The viscosity of the liquid precursors was measured at 25 °C according to DIN EN ISO 2555:1999 using a Brookfield Digital Viscosimeter DV-II commercially available from Brookfield Engineering Laboratories, Inc.

### B. List of materials used in the examples:

| Abbreviation/ product | Name | Available from |
|---|---|---|
| IOA | Isooctyl acrylate | Synthesis from isooctylalcohol and acrylic acid |
| 2-EHA | 2-ethyl hexyl acrylate | BASF AG, Germany |
| AA | Acrylic acid | BASF, Germany |
| HDDA | 1,6-hexanediol diacrylate | Sartomer Co., France |
| NVC | N-Vinylcaprolactam | BASF AG, Germany |
| ACMO | Acryloyl morpholine | Rahn, Switzerland |
| THF-acrylate | Tetrahydrofurfuryl acrylate | AgiSyn, Japan |
| CHA | Cyclohexyl acrylate - | BASF AG, Germany |
| Benzyl acrylate | | Sigma Aldrich |
| Tackifier | C-9 partially hydrogenated resin tackifier sold under the trade designation "REGALREZ 6108" | Eastman Chemical Company, Middelburg Netherlands |
| UV initiator | 2,2-dimethoxy-2-phenyl acetophenone sold under the trade designation "OMNIRAD BDK" | iGm resins, Waalwijk, Netherlands |

### Preparation of curable precursor of adhesive: general procedure

In a first step, part or all of the monomers (as is indicated in the examples) were mixed in a vessel containing 0.04 pph of photoinitiator OMNIRAD BDK. The mixture was partially polymerized under a nitrogen-rich atmosphere by UV radiation (fluorescent lamps at a wavelength between 300 - 400 nm with a maximum at 351 nm), under continuous stirring with a propeller stirrer (300 T/min). The reaction was stopped by purging the mixture with oxygen, when the stirring moment reached a value of 70 units (Brookfield viscosity of appr. 4000 mPa s at 25 °C).

In a second step, any monomers not added in the first step, crosslinking agent, an additional 0.13 pph of photoinitiator OMNIRAD BDK, Glassbubbles K15, AEROSIL 972 and tackifier were added and the resulting mixture was thoroughly stirred for 30 min.

### Preparation of self-stick foam adhesive: general procedure

The curable precursors prepared as described above were coated at a thickness of 800 µm, between two 75 µm solvent free siliconized PET-liners (SLVK-Liner (300 mm x 300 mm) and cured in a UV reactor (active zone 3 m) and using a UV intensity as given below.

**Curing profile:**

| | Zone 1 (length 2 m) | Zone 2 (length 1 m) |
|---|---|---|
| Total intensity [mW/cm2] | 2.7 | 5.2 |

### Examples

In all cases self-stick foam adhesives were prepared according to the general procedures as outlined above. The adhesive properties were tested according to the methods described above.

### Examples 1 to 3, reference example Ref-1, comparative examples C-1 and C-2

In examples 1 to 3 curable precursors were prepared from a monomer composition of 92 wt. % IOA, 3 wt. % AA and 5 wt. % monomers comprising a nitrogen- or oxygen containing heterocyclic ring, as given in table 1 (Monomer ii). This monomer composition was partially polymerized according to the general procedure. To 100 parts of this monomer composition were added 0.12 parts HDDA, 10 parts tackifier REGALREZ 6108, 6 parts Glassbubbles K15 and 3 parts AEROSIL 972. Comparative examples C-1 and C-2 were made the same way, but with 5 parts cyclohexyl acrylate (CHA) (C-1) or benzyl acrylate (C-2) instead of monomer ii). Comparative example C-3 was made with a monomer mixture of IOA/AA 95/5, without addition of monomer ii). 0.13 pph OMNIRAD BDK photoinitiator was added and the curable precursors were coated and cured according to the general procedure outlined above.

The self-stick foam adhesives were tested for 90°peel (Finat No. 2) on different substrates and for static shear on SS (Finat No. 8). The results are given in table 1:

**Table 1**

| Ex | Monomer ii) | 90°-Peel [N/12.7 mm] Steel | 90°-Peel [N/12.7 mm] PE-foil | 90°-Peel [N/12.7 mm] PP-plate | Static shear [min] Steel |
|---|---|---|---|---|---|
| 1 | NVC | 21.54 | 11.08 | 16.10 | 10000+ |
| 2 | ACMO | 20.97 | 9.63 | 13.34 | 10000+ |
| 3 | THF-acrylate | 18.41 | 12.32 | 16.13 | 10000+ |
| C-1 | CHA | 16.06 | 10.55 | 17.68 | 35 |
| C-2 | Benzyl acrylate | 14.98 | 11.83 | 22.99 | 221 |
| C-3 | / | 20.74 | 10.91 | 12.40 | 5568 |

### Examples 4 to 6

In examples 4 to 6 self-stick foam adhesives were prepared from a monomer composition of 82.5 wt. % IOA, 2.5 wt. % AA and 15 wt. % monomers ii) as given in table 2. The monomers were pre-polymerized to a syrup according to the general procedure. To 100 parts of this syrup were added 0.12 parts HDDA, 10 parts REGALREZ 6108, 6 parts Glassbubbles K 15 and 3 parts AEROSIL 972. 0.13 pph OMNIRAD BDK photoinitiator was added and the curable precursors were coated and cured according to the general procedure outlined above. Comparative example C-4 was made as example 1, but without addition of tackifier. Comparative example C-5 was made with IOA/AA 97.5/2.5 monomer mixture, without addition of monomer ii).

The self-stick foam adhesives were tested for 90°peel (Finat No. 2) on different substrates and for static shear on SS (Finat No. 8). The results are given in table 2.

**Table 2**

| Ex | Monomer ii) | 90°-Peel [N/12.7 mm] Steel | 90°-Peel [N/12.7 mm] PE foil | 90°-Peel [N/12.7 mm] PP-foil | Static shear [min] Steel |
|---|---|---|---|---|---|
| 4 | NVC | 23.39 | 10.64 | 16.38 | 10000+ |
| 5 | ACMO | 30.17 | 7.63 | 11.95 | 10000+ |
| 6 | THF-acrylate | 22.01 | 12.62 | 18.21 | 10000+ |
| C-4 | NVC (no tackifier) | 22.75 | 4.28 | 7.88 | 10000+ |
| C-5 | / | 23.5 | 16.1 | 15.8 | 73 |

### Example 7 and comparative example C-6

In example 7 a self-stick foam adhesive was prepared from a monomer composition of 76.5 wt. % 2-EHA, 1.5 wt. % AA and 22 wt. % NVC. The monomers were pre-polymerized to a syrup according to the general procedure. To 100 parts of this syrup were added 10 parts REGALREZ 6108, 0.09 parts HDDA, 9 parts AEROSIL 972 and 6 parts Glassbubbles K15. 0.14 parts OMNIRAD BDK per 100 parts monomer were added and the curable precursor was coated and cured according to the general procedure. Comparative example C-6 was a laminated foam tape, available as "GTE 6208" (available from 3M). The self-stick foam adhesive of example 7 and the comparative laminated foam tape of C-6 were tested for 90°peel (dwell time of 20 min, 24 hours, 72 hours at a temperature of 23°C and 50% relative humidity) and for static shear (500 g at 70 °C ; dwell time of 24 hours), on UreGloss. The results are given in talbe 3. The samples were also tested for Dynamic shear (70 °C), Breakaway-Continuous Peel and Stress relaxation on UreGloss, The results are given in table 4. The samples were also tested in the cold slam test. Both example 7 and comparative example C-6 passed the cold slam test. Finally, the self-stick foam adhesive of example 7 was further tested for 90°peel (dwell time 24 hours, at 23 °C and 50 % relative humidity) and for static shear on different substrates as given in table 5.

**Table 3**

| TEST (UreGloss) | Example 8 | C-2 |
|---|---|---|
| 90°-peel (20 min) [N/12.7mm] | 15.19 | 15.50 |
| 90°-peel (24 hrs) [N/12.7mm] | 19.05 | 17.90 |
| 90°-peel (72 hrs) [N/12.7mm] | 19.25 | 18.53 |
| Static shear (500 g @ 70°C) [min] | 10000+ | 10000+ |

**Table 4: test results on UreGloss**

| Ex | Dynamic shear [N/cm²] | Breakaway-Continuous peel | | Stress relaxation | | |
|---|---|---|---|---|---|---|
| | | Breakaway [N] | Continuous peel ([N/cm] | F max breakaway [N] | F relax [N] | F peel-off [N/cm²] |
| Ex 8 | 19.33 | 99.9 | 26.64 | 65.32 | 25.33 | 72.19 |
| C-2 | 19.00 | 69.5 | 24.20 | 23.30 | 11.80 | 24.30 |

**Table 5**

| Test | CeramiClear 5 | 2K clear coat |
|---|---|---|
| 90°-peel (24 hours) [N/12.7mm] | 25.06 | 24.56 |
| Static shear (500 g @ 70°C) [min] | 10000+ | 10000+ |

## Claims

1. Method of making a self-stick foam adhesive, comprising
a. a crosslinked (meth)acrylate polymer comprising repeating units derivable from a monomer composition comprising
i. 55 to 97.4 wt. % of one or more alkyl (meth)acrylate monomers, the alkyl groups of which comprise from 4 to 14 carbon atoms
ii. 2.5 to 40 wt. % of one or more ethylenically unsaturated monomers comprising a nitrogen- or oxygen containing heterocyclic ring
iii. 0.1 to 5 wt. % of one or more polar comonomers
b. 1 to 60 parts by weight of one or more hydrogenated resin tackifier per 100 parts by weight of the cross-linked (meth)acrylate polymer and
c. 1 to 20 parts by weight microspheres per 100 parts by weight of the cross-linked (meth)acrylate polymer,
the method comprising
polymerizing monomer components of the monomer composition and wherein at least part of the polymerization is carried in the presence of crosslinking agent, the total amount of crosslinking agent used in the polymerization being between 0.01 and 2 parts by weight per 100 parts by weight of the monomer composition, 1 to 60 parts of one or more hydrogenated resin tackifier per 100 parts by weight of the monomer composition and 1 to 20 parts microspheres per 100 parts of the monomer composition and
wherein the polymerization is initiated by radiation substantially in the absence of solvent.

2. Method according to claim 1 wherein the polymerization comprises
a) Partial polymerization of at least monomers (i) and (iii) in the presence of a free radical initiator substantially in the absence of solvent so as to form a syrup having a Brookfield viscosity between 300 and 50000 mPa.s (25°C); terminating the partial polymerization by introducing free radical inhibition in the syrup;
b) Adding to the syrup any remaining amount of monomers of the monomer composition so as to obtain the desired composition of the (meth)acrylate polymer, the crosslinking agent, the tackifier, the microspheres, and a radiation activatable free-radical initiator and initiating by exposing the thus obtained mixture to radiation substantially in the absence of solvent.

3. Method according to any one of claims of 1 or 2 wherein the one or more alkyl (meth) acrylate monomers comprise one or more acrylate esters selected from isooctyl acrylate, 2-ethyl hexyl acrylate, n-butyl acrylate, n-heptyl acrylate, n-octyl acrylate, isononyl acrylate, n-decyl acrylate, 2-propyl heptyl acrylate and combinations thereof.

4. Method according to any one of claims 1 to 3 wherein the mixture comprises between 75 and 92 wt. % alkyl (meth)acrylate monomers.

5. Method according to any one of claims 1 to 4 wherein the ethylenically unsaturated monomer comprising a nitrogen- or oxygen containing heterocyclic ring is selected from the group consisting of vinyl derivatives including N-vinyl lactams, N-vinyl pyrrolidone, N-vinyl phtalamid, N-vinyl imidazol and (meth)acrylate derivatives including pyrrolidone (meth)acrylates, tetrahydrofurfuryl (meth)acrylate, (meth)acryloyl morpholine, oxetane (meth)acrylates and dioxolane (meth)acrylates and mixtures thereof.

6. Method according to any one of claims 1 to 5 wherein the mixture comprises from 5 to 30 wt. % of the ethylenically unsaturated monomer comprising a nitrogen- or oxygen containing heterocyclic ring.

7. Method according to any one of claims 1 to 6 wherein the polar monomer is selected from strongly polar monomers including acrylic acid, methacrylic acid and itaconic acid.

8. Method according to any one of claims 1 to 7 wherein the tackifier comprises a fully hydrogenated hydrocarbon resin.

9. Method according to any one of claims 1 to 8 wherein the microspheres are selected from glass bubbles, ceramic microspheres, expanded and expandable polymeric microspheres.

10. A self-stick foam adhesive obtainable by the method of any one of claims 1 to 9.

11. The self-stick foam adhesive according to claim 10 having a 90° peel adhesion greater than 15 N/12.7 mm when tested on clear coats, according to FINAT No. 2 test method and a shear value greater than 2000 min when tested according to FINAT No. 8 (SS, 70°C, 500 g).

12. An article comprising a layer of the self-stick foam adhesive according to any one of claims 10 or 11 having a thickness between 150 and 3000µm and comprising at least one liner selected from a release liner and a carrier film.

13. An article comprising the self-stick foam adhesive according to any one of claims 10 or 11 and at least one substrate having a surface tension of less than 50 mN/m as measured prior to applying the adhesive.

14. Use of a self-stick foam adhesive according to any one of claims 10 or 11 for adhering substrates wherein at least one of the substrates has a surface tension of less than 50mN/m as measured prior to applying the adhesive.

15. A self-stick foam adhesive comprising
a) a crosslinked (meth)acrylate polymer comprising
i. 55 to 97.4 wt. % of units derived from one or more alkyl (meth)acrylate monomers, the alkyl groups of which comprise from 4 to 14 carbon atoms
ii. 2.5 to 40 wt. % of units derived from one or more ethylenically unsaturated monomers comprising a nitrogen- or oxygen containing heterocyclic ring
iii. 0.1 to 5 wt. % of units derived from one or more polar comonomers
b) 1 to 60 parts of one or more hydrogenated resin tackifier based on 100 parts by weight of the crosslinked (meth)acrylate polymer and
c) 1 to 20 parts microspheres per 100 parts by weight of the crosslinked (meth)acrylate polymer.

## Patentansprüche

1. Verfahren zur Herstellung eines selbstklebenden Schaumstoffklebers, umfassend
a. ein vernetztes (Meth)acrylatpolymer mit Wiederholungseinheiten, die von einer Monomerzusammensetzung, umfassend
i. 55 bis 97,4 Gew.-% eines oder mehrerer Alkyl(meth)acrylatMonomere mit 4 bis 14 Kohlenstoffatomen in der Alkylgruppe,
ii. 2, 5 bis 40 Gew.-% eines oder mehrerer ethylenisch ungesättigter Monomere mit einem stickstoff- oder sauerstoffhaltigen heterocyclischen Ring,
iii. 0,1 bis 5 Gew.-% eines oder mehrerer polarer Comonomere, ableitbar sind,
b. 1 bis 60 Gewichtsteile eines oder mehrerer hydrierter Harzklebrigmacher auf 100 Gewichtsteile des vernetzten (Meth)acrylatpolymers und
c. 1 bis 20 Gewichtsteile Mikrokugeln auf 100 Gewichtsteile des vernetzten (Meth)acrylatpolymers,
bei dem man
Monomerkomponenten der Monomerzusammensetzung polymerisiert und wobei mindestens ein Teil der Polymerisation in Gegenwart von Vernetzungsmittel, wobei die bei der Polymerisation verwendete Gesamtmenge an Vernetzungsmittel zwischen 0,01 und 2 Gewichtsteilen auf 100 Gewichtsteile der Monomerzusammensetzung, 1 bis 60 Teilen eines oder mehrerer hydrierter Harzklebrigmacher auf 100 Gewichtsteile der Monomerzusammensetzung und 1 bis 20 Teilen Mikrokugeln auf 100 Teile der Monomerzusammensetzung liegt, durchgeführt wird und
wobei die Polymerisation weitgehend in Abwesenheit von Lösungsmittel durch Strahlung initiiert wird.

2. Verfahren nach Anspruch 1, bei dem die Polymerisation Folgendes umfasst:
a) Teilpolymerisation von mindestens Monomeren (i) und (iii) in Gegenwart eines Radikalinitiators weitgehend in Abwesenheit von Lösungsmittel zur Bildung eines Sirups mit einer Brookfield-Viskosität zwischen 300 und 50.000 mPa.s (25°C);
Abbrechen der Teilpolymerisation durch Eintragen von Radikalinhibierung in den Sirup;
b) Zugeben jeglicher verbliebener Menge von Monomeren der Monomerzusammensetzung zu dem Sirup zum Erhalt der gewünschten Zusammensetzung des (Meth)acrylatpolymers, des Vernetzungsmittels, des Klebrigmachers, der Mikrokugeln und eines durch Strahlung aktivierbaren Radikalinitiators und Initiieren durch Bestrahlen der so erhaltenen Mischung weitgehend in Abwesenheit von Lösungsmittel.

3. Verfahren nach einem der Ansprüche 1 oder 2, bei dem das eine oder die mehreren Alkyl(meth)acrylat-Monomere einen oder mehrere aus Isooctylacrylat, 2-Ethylhexylacrylat, n-Butylacrylat, n-Heptylacrylat, n-Octylacrylat, Isononylacrylat, n-Decylacrylat, 2-Propylheptylacrylat und Kombinationen davon ausgewählte Acrylatester umfasst.

4. Verfahren nach einem der Ansprüche 1 bis 3, bei dem die Mischung zwischen 75 und 92 Gew.-% Alkyl(meth)acrylat-Monomere umfasst.

5. Verfahren nach einem der Ansprüche 1 bis 4, bei dem das ethylenisch ungesättigte Monomer mit einem stickstoff- oder sauerstoffhaltigen heterocyclischen Ring aus der Gruppe bestehend aus Vinylderivaten einschließlich N-Vinyllactamen, N-Vinylpyrrolidon, N-Vinylphthalamid, N-Vinylimidazol und (Meth)acrylatderivaten einschließlich Pyrrolidon-(meth)acrylaten, Tetrahydrofurfuryl(meth)acrylat, (Meth)acryloyl-morpholin, Oxetan(meth)acrylaten und Dioxolan(meth)acrylaten und Mischungen davon ausgewählt wird.

6. Verfahren nach einem der Ansprüche 1 bis 5, bei dem die Mischung 5 bis 30 Gew.-% des ethylenisch ungesättigten Monomers mit einem stickstoff- oder sauerstoffhaltigen heterocyclischen Ring umfasst.

7. Verfahren nach einem der Ansprüche 1 bis 6, bei dem das polare Monomer aus stark polaren Monomeren einschließlich Acrylsäure, Methacrylsäure und Itaconsäure ausgewählt wird.

8. Verfahren nach einem der Ansprüche 1 bis 7, bei dem der Klebrigmacher ein vollhydriertes Kohlenwasserstoffharz umfasst.

9. Verfahren nach einem der Ansprüche 1 bis 8, bei dem die Mikrokugeln aus Glashohlkugeln, Keramikmikrokugeln, expandierten und expandierbaren Polymermikrokugeln ausgewählt werden.

10. Selbstklebender Schaumstoffkleber, der nach dem Verfahren nach einem der Ansprüche 1 bis 9 erhältlich ist.

11. Selbstklebender Schaumstoffkleber nach Anspruch 10 mit einer 90°-Schälhaftung von mehr als 15 N/12,7 mm bei Prüfung auf Klarlacken gemäß der Testmethode FINAT Nr. 2 und einem Scherwert von mehr als 2000 min bei Prüfung gemäß FINAT Nr. 8 (SS, 70°C, 500 g).

12. Gegenstand, umfassend eine Schicht des selbstklebenden Schaumstoffklebers nach einem der Ansprüche 10 oder 11 mit einer Dicke zwischen 150 und 3000 µm und mindestens einen aus einem Releaseliner und einer Trägerfolie ausgewählten Liner.

13. Gegenstand, umfassend den selbstklebenden Schaumstoffkleber nach einem der Ansprüche 10 oder 11 und mindestens ein Substrat mit einer vor dem Aufbringen des Klebers gemessenen Oberflächenspannung von weniger als 50 mN/m.

14. Verwendung eines selbstklebenden Schaumstoffklebers nach einem der Ansprüche 10 oder 11 zum Verkleben von Substraten, wobei mindestens eines der Substrate eine vor dem Aufbringen des Klebers gemessene Oberflächenspannung von weniger als 50 mN/m aufweist.

15. Selbstklebender Schaumstoffkleber, umfassend
a) ein vernetztes (Meth)acrylatpolymer, umfassend
i. 55 bis 97,4 Gew.-% von einem oder mehreren Alkyl(meth)acrylat-Monomeren mit 4 bis 14 Kohlenstoffatomen in der Alkylgruppe abgeleitete Einheiten,
ii. 2, 5 bis 40 Gew.-% von einem oder mehreren ethylenisch ungesättigten Monomeren mit einem stickstoff- oder sauerstoffhaltigen heterocyclischen Ring abgeleitete Einheiten,
iii. 0,1 bis 5 Gew.-% von einem oder mehreren polaren Comonomern,
abgeleitete Einheiten,
b) 1 bis 60 Teile eines oder mehrerer hydrierter Harzklebrigmacher auf 100 Gewichtsteile des vernetzten (Meth)acrylatpolymers und
c) 1 bis 20 Teile Mikrokugeln auf 100 Gewichtsteile des vernetzten (Meth)acrylatpolymers.

## Revendications

1. Procédé de fabrication d'un adhésif mousse autocollant, comprenant :
a. un polymère (méth)acrylate réticulé comprenant des unités de répétition qui peuvent être dérivées d'une composition de monomères comprenant :
i. 55 % à 97,4 % en poids d'un ou plusieurs monomères (méth)acrylates d'alkyle, dont les groupes alkyle comprennent de 4 à 14 atomes de carbone ;
ii. 2,5 % à 40 % en poids d'un ou plusieurs monomères à insaturation éthylénique comprenant un cycle hétérocyclique contenant de l'azote ou de l'oxygène ;
iii. 0,1 % à 5 % en poids d'un ou plusieurs comonomères polaires ;
b. 1 à 60 parties en poids d'un ou plusieurs agents collants sous forme de résine hydrogénée par 100 parties en poids du polymère (méth)acrylate réticulé ; et
c. 1 à 20 parties en poids de microsphères par 100 parties en poids du polymère (méth)acrylate réticulé,
le procédé comprenant :
la polymérisation des constituants monomères de la composition de monomères, au moins une partie de la polymérisation étant réalisée en présence d'un agent de réticulation, la quantité totale d'agent de réticulation utilisée dans la polymérisation étant de 0,01 à 2 parties en poids par 100 parties en poids de la composition de monomères, de 1 à 60 parties d'un ou plusieurs agents collants sous forme de résine hydrogénée par 100 parties en poids de la composition de monomères, et de 1 à 20 parties de microsphères par 100 parties de la composition de monomères ; et
la polymérisation étant amorcée par exposition à un rayonnement pratiquement en l'absence de solvant.

2. Procédé selon la revendication 1, dans lequel la polymérisation comprend :
a) une polymérisation partielle d'au moins les monomères (i) et (iii) en présence d'un initiateur radicalaire, pratiquement en l'absence de solvant, de façon à former un sirop ayant une viscosité Brookfield de 300 mPa.s à 50 000 mPa.s (25 °C) ; la polymérisation partielle étant interrompue par introduction d'une inhibition radicalaire dans le sirop ;
b) l'addition au sirop de tout le reste des monomères de la composition de monomères, de façon à obtenir la composition souhaitée du polymère (méth)acrylate, de l'agent de réticulation, de l'agent collant, des microsphères, et d'un initiateur radicalaire activable par exposition à un rayonnement et l'amorçage par exposition du mélange ainsi obtenu à un rayonnement pratiquement en l'absence de solvant.

3. Procédé selon l'une quelconque des revendications 1 ou 2, dans lequel lesdits un ou plusieurs monomères (méth)acrylates d'alkyle comprennent un ou plusieurs esters acrylates sélectionnés parmi l'acrylate d'isooctyle, l'acrylate de 2-éthylhexyle, l'acrylate de n-butyle, l'acrylate de n-heptyle, l'acrylate de n-octyle, l'acrylate d'isononyle, l'acrylate de n-décyle, l'acrylate de 2-propylheptyle, et des combinaisons de ceux-ci.

4. Procédé selon l'une quelconque des revendications 1 à 3, dans lequel le mélange comprend 75 % à 92 % en poids de monomères (méth)acrylates d'alkyle.

5. Procédé selon l'une quelconque des revendications 1 à 4, dans lequel le monomère à insaturation éthylénique comprenant un cycle hétérocyclique contenant de l'azote ou de l'oxygène est sélectionné dans le groupe constitué de dérivés vinyliques comprenant des N-vinyllactames, la N-vinylpyrrolidone, le N-vinylphtalamide, le N-vinylimidazole et des dérivés (méth)acrylates comprenant des (méth)acrylates de pyrrolidones, le (méth)acrylate de tétrahydrofurfuryle, la (méth)acryloylmorpholine, des (méth)acrylates d'oxétanes et des (méth)acrylates de dioxolanes, et des mélanges de ceux-ci.

6. Procédé selon l'une quelconque des revendications 1 à 5, dans lequel le mélange comprend de 5 % à 30 % en poids du monomère à insaturation éthylénique comprenant un cycle hétérocyclique contenant de l'azote ou de l'oxygène.

7. Procédé selon l'une quelconque des revendications 1 à 6, dans lequel le monomère polaire est sélectionné parmi des monomères fortement polaires comprenant l'acide acrylique, l'acide méthacrylique et l'acide itaconique.

8. Procédé selon l'une quelconque des revendications 1 à 7, dans lequel l'agent collant comprend une résine hydrocarbure entièrement hydrogénée.

9. Procédé selon l'une quelconque des revendications 1 à 8, dans lequel les microsphères sont sélectionnées parmi des sphères creuses en verre, des microsphères de céramique, et des microsphères polymères expansées et expansibles.

10. Adhésif mousse autocollant pouvant être obtenu par le procédé selon l'une quelconque des revendications 1 à 9.

11. Adhésif mousse autocollant selon la revendication 10, présentant une résistance au décollement à 90° supérieure à 15 N/12,7 mm, déterminée par des essais sur des revêtements transparents, selon la méthode d'essai FINAT n° 2, et une valeur de cisaillement supérieure à 2 000 min, déterminée par des essais selon la méthode FINAT n° 8 (acier inoxydable, 70 °C, 500 g).

12. Article comprenant une couche de l'adhésif mousse autocollant selon l'une quelconque des revendications 10 ou 11 ayant une épaisseur de 150 µm à 3 000 µm et comprenant au moins une doublure sélectionnée parmi une doublure anti-adhésive et un film de support.

13. Article comprenant l'adhésif mousse autocollant selon l'une quelconque des revendications 10 ou 11 et au moins un substrat présentant une tension superficielle inférieure à 50 mN/m, mesurée avant l'application de l'adhésif.

14. Utilisation d'un adhésif mousse autocollant selon l'une quelconque des revendications 10 ou 11 pour une fixation adhésive sur des substrats, au moins un des substrats présentant une tension superficielle inférieure à 50 mN/m, mesurée avant l'application de l'adhésif.

15. Adhésif mousse autocollant comprenant :
a) un polymère (méth)acrylate réticulé comprenant :
i. 55 % à 97,4 % en poids d'unités dérivées d'un ou plusieurs monomères (méth)acrylates d'alkyle, dont les groupes alkyle comprennent de 4 à 14 atomes de carbone ;
ii. 2,5 % à 40 % en poids d'unités dérivées d'un ou plusieurs monomères à insaturation éthylénique comprenant un cycle hétérocyclique contenant de l'azote ou de l'oxygène ;
iii. 0,1 % à 5 % en poids d'unités dérivées d'un ou plusieurs comonomères polaires ;
b) 1 à 60 parties d'un ou plusieurs agents collants sous forme de résine hydrogénée par 100 parties en poids du polymère (méth)acrylate réticulé ; et
c) 1 à 20 parties de microsphères par 100 parties en poids du polymère (méth)acrylate réticulé.
